# DEMANDE DE BREVET EUROPEEN

(11) **EP 0 600 803 A1**
(43) Date de publication de la demande: **08.06.1994**
(21) Numéro de dépôt: 93402938.0
(22) Date de dépôt: 03.12.1993
(51) Int. Cl.: H04M 3/50

(54) **Procédé et dispositif de transmission d'informations entre une entité expéditrice et une entité destinatrice**

(30) Priorité: 04.12.1992 FR 9214618
(71) Demandeur: INFO TELECOM, F-67550 Vendenheim (FR)
(72) Inventeur: Reibel, Jean-Michel, F-67450 Lampertheim (FR); Simon, Pierre-Luc, F-67310 Wasselonne (FR)
(74) Mandataire: Casalonga, Axel

(57) **Abrégé**

L'entité expéditrice (15) stocke un message d'information destiné à l'entité destinatrice (16) dans une zone-mémoire (27) d'une mémoire-station (7) d'une station (4) susceptible d'être appelée par l'entité destinatrice (16) en utilisant au moins un poste d'appel (2) relié à ladite station (4) par un milieu de transmission de données (1), et possédant une interface de communication (28) avec l'entité destinatrice. L'entité expéditrice (15) fournit à l'entité destinatrice (16) un objet autonome (8) contenant un code d'identification-mémoire (C1) associé à la zone-mémoire (27) et susceptible d'être émis à l'extérieur de l'objet sur activation de l'entité destinatrice. L'entité destinatrice (16) se connecte à la station (4) en utilisant le poste d'appel (2) et active l'objet autonome (8) pour faire émettre ledit code d'identification-mémoire en direction de l'interface de communication (28) du poste d'appel (2), ledit code d'identification-mémoire étant alors transmis sur le milieu de transmission de données (1) en direction de la station (4). La station (4), à la réception du code d'identification-mémoire, restitue le message stocké dans zone-mémoire (27), sur le milieu de transmission de données (1) vers le poste d'appel (2), l'entité destinatrice (16) percevant ledit message d'information par l'intermédiaire de l'interface de communication (28) de son poste d'appel.

## Description

L'invention concerne la transmission d'informations entre une entité expéditrice et une entité destinatrice.

De très nombreuses recherches ont déjà été effectuées jusqu'alors, visant à apporter à des objets inanimés tels des cartes postales, des livres, des voitures miniatures ou des bouquets de fleurs, qu'un expéditeur souhaite envoyer à un destinataire, une valeur ajoutée sous la forme d'une expression sensitive, par exemple olfactive, visuelle ou sonore. Or, plus particulièrement dans le cas d'expressions sonores, et notamment en ce qui concerne des objets de faible encombrement destinés à une distribution grand public, ces recherches ont toutes buté sur des contraintes incontournables liées au désir de stocker un enregistrement de taille importante tout en respectant des contraintes d'encombrement et de coût fixées. En effet, si la taille de l'enregistrement est augmentée, le coût et l'encombrement deviennent trop importants. Au contraire, si l'on se maintient dans une zone et d'encombrement autorisée, la taille de l'enregistrement reste très limitée.

Un but général de l'invention est d'associer à un objet autonome, notamment de manière personnalisée, un enregistrement de taille importante qui pourra être restitué au destinataire de l'objet; l'invention vise ainsi notamment à apporter une solution au problème évoqué plus haut de l'expédition des objets inanimés.

L'invention a également pour but de permettre l'association d'une très grande variété de messages enregistrés, en particulier sonores.

L'invention a encore pour but de réaliser de tels enregistrements quel que soit l'encombrement des objets inanimés que l'on souhaite envoyer, et ce à un coût industriellement raisonnable.

L'invention propose donc tout d'abord un procédé de transmission d'informations entre une entité expéditrice et une entité destinatrice; selon une caractéristique générale de l'invention,
a) l'entité expéditrice stocke ou fait stocker un message d'information destiné à l'entité destinatrice dans une zone-mémoire d'une mémoire-station d'une station susceptible d'être appelée par l'entité destinatrice en utilisant au moins un poste d'appel possédant une interface de communication avec l'entité destinatrice, et relié à ladite station par un milieu de transmission de données,
b) l'entité destinatrice étant en possession d'un objet autonome fourni directement ou indirectement par l'entité expéditrice ou susceptible d'être appelé à distance directement ou indirectement par l'entité expéditrice, et contenant un code d'identification-mémoire associé à la zone-mémoire et susceptible d'être émis à l'extérieur de l'objet sur activation par l'entité destinatrice, l'entité destinatrice se connecte à la station en utilisant le poste d'appel et active l'objet autonome pour faire émettre le code d'identification en direction de l'interface de communication du poste d'appel, ledit code d'idenfication-mémoire étant alors transmis sur le milieu de transmission de données en direction de la station, et
c) la station, à la réception du code d'identification-mémoire restitue le message stocké dans ladite zone-mémoire, sur le milieu de transmission de données vers le poste d'appel, l'entité destinatrice percevant alors ledit message d'information par l'intermédiaire de l'interface de communication de son poste d'appel.

L'entité expéditrice peut fournir ou faire fournir l'objet autonome à l'entité destinatrice avec une indication du numéro d'appel de la station; l'entité destinatrice se connecte alors à la station après la réception de l'objet autonome ou à un instant ultérieur si elle le désire.

En variante l'objet autonome peut être appelé à distance, directement ou indirectement par l'entité expéditrice. Il en est ainsi par exemple lorsque l'objet autonome forme en outre un récepteur de radiomessagerie qui comporte des moyens de réception-objet susceptible de coopérer avec un autre milieu de transmission de données, tel qu'un milieu de transmission radiofréquence. Dans ce cas l'entité destinatrice est en possession de l'objet autonome avant le stockage du message d'information dans ladite zone-mémoire; l'entité expéditrice transmet alors ou fait transmettre un appel spécifique de l'objet autonome par cet autre milieu de transmission de données et l'entité destinatrice se connecte à la station après réception dudit appel spécifique. Dans le cas d'un récepteur de radiomessagerie contenant un identifiant, ce dernier est alors avantageusement ledit code d'identification-mémoire.

L'invention résout donc un problème spécifiquement lié aux récepteurs de radiomessagerie, qui d'une part ne sont absolument pas prévus pour transmettre une information, et qui d'autre part sont pourvus d'un écran d'affichage de taille réduite limitant ainsi considérablement la taille des messages que l'on souhaite leur faire parvenir. L'invention permet ainsi, en "déportant" à l'extérieur de l'objet une mémoire de taille importante et en transformant partiellement le mode de restitution visuel des messages sur l'objet lui-même par un mode de restitution extérieur à l'objet, d'apporter une plus grande souplesse d'utilisation de tels récepteurs de radiomessagerie.

Selon un mode de mise en oeuvre de l'invention notamment applicable à l'envoi de cartes de voeux, on fournit, dans l'étape a), à l'entité expéditrice, l'objet autonome contenant un code d'identification-objet; l'entité expéditrice se connecte à alors la station par l'intermédiaire d'un poste d'appel relié à ladite station, puis active l'objet autonome pour faire émettre ledit code d'identification-objet en direction de l'interface de communication du poste d'appel, ledit code d'identification-objet étant alors transmis sur le milieu de transmission de données en direction de la station; la station alloue alors ladite zone-mémoire prédéterminée à la réception du code d'identification-objet; l'entité expéditrice communique alors son message à la station par l'intermédiaire de l'interface de communication du poste d'appel et la station stocke le message reçu dans la zone-mémoire allouée, le code d'identification-mémoire, utilisé lors de la restitution du message, étant alors le code d'identification-objet.

Dans le cas où le milieu de transmission de données fait partie d'un réseau de transmission de données équipé d'une pluralité de postes d'appel, les entités expéditrice et destinatrice peuvent appeler la station à partir du même poste d'appel ou de postes d'appel différents.

Lorsque le réseau de transmission de données est un réseau téléphonique, tel que le réseau téléphonique commuté public, équipé de postes d'appel téléphoniques, la station est alors avantageusement un serveur vocal téléphonique; le code d'identification-objet ou le code d'identification-mémoire est alors émis de façon acoustique en direction du microphone du poste d'appel téléphonique tandis que l'entité expéditrice communique oralement son message pendant un temps prédéterminé à la station par l'intermédiaire du microphone du poste téléphonique et que l'entité destinatrice perçoit oralement le message par l'intermédiaire du haut-parleur de son poste téléphonique d'appel.

Dans le cas où une entité expéditrice souhaite transmettre une pluralité de message à l'entité réceptrice, l'objet autonome contient alors avantageusement une pluralité de codes d'identification-mémoire ou objet associés respectivement à la pluralité de messages et à une pluralité de zones-mémoire correspondantes; on fait alors émettre successivement la pluralité de codes d'identification vers la station, cette dernière restituant alors successivement la pluralité de messages stockés.

L'invention a également pour objet un dispositif de transmission d'informations entre une entité expéditrice et une entité destinatrice; selon une caractéristique générale de l'invention, ce dispositif comprend:
- une station comportant:
   . une interface-station connectée à un milieu de transmission de données reliant cette station à au moins un poste d'appel susceptible d'établir une liaison avec ladite station et équipé d'une interface de communication avec l'entité destinatrice,
   . une mémoire-station apte à stocker dans une zone-mémoire prédéterminée, des données de message représentatives d'au moins un message d'information choisi par l'entité expéditrice, et
   . des moyens de traitement-station, aptes en réponse à un signal de restitution prédéterminée reçu par l'interface-station, à lire les données de message dans la zone-mémoire aux fins de restitution à l'interface de communication du poste d'appel par l'intermédiaire du milieu de transmission de données dudit message d'informations, et,
- un objet autonome destiné à être en possession de l'entité destinatrice, comportant:
   . un transducteur apte en présence d'un signal d'entrée à délivrer un signal de sortie capable d'être reçu par l'interface de communication du poste d'appel,
   . une mémoire-objet susceptible de contenir un code d'identification-mémoire associé à la zone-mémoire prédéterminée,
   . des moyens de traitement-objet, reliés à la mémoire-objet, et aptes, sur activation, à lire le code d'identification-mémoire dans la mémoire-objet et à délivrer au transducteur un signal d'entrée d'identification correspondant, ce dernier délivrant alors à l'interface de communication du poste d'appel, un signal de sortie d'identification correspondant, à partir duquel est obtenu ledit signal de restitution, et
   . des moyens d'activation aptes, en réponse à un actionnement externe, à activer les moyens de traitement-objet.

Selon un mode de réalisation préféré de l'invention, les moyens de traitement-station sont aptes, en réponse à un signal d'allocation prédéterminé, reçu par l'interface-station, à réserver ladite zone-mémoire prédéterminée dans la mémoire-station et à y stocker lesdites données de message transmises par l'entité expéditrice; la mémoire-objet est alors susceptible de contenir un code d'identification-objet transmissible à l'interface de communication du poste d'appel par l'intermédiaire d'un signal d'identification-objet, le code d'identification mémoire est alors identique au code d'identification-objet.

Les moyens d'activation peuvent comporter au moins un contact manuel actionnable disposé sur la surface externe de l'objet.

Dans le cas où la mémoire-objet est capable de stocker, une pluralité de codes d'identification associés à une pluralité de messages, les moyens d'activation peuvent comporter alors une pluralité de touches actionnables associées respectivement à la pluralité de messages.

Dans le cas où le milieu de transmission de données fait partie d'un réseau téléphonique équipé de postes téléphoniques formant les postes d'appel potentiels, et d'un serveur téléphonique vocal formant ladite station, le transducteur est alors avantageusement un transducteur électroacoustique capable de coopérer avec le microphone d'un poste téléphonique.

Dans le cas où la transmission du code d'identification, composé d'une pluralité de bits, est acoustique, les moyens de traitement-objet comportent avantageusement des moyens de codage aptes, pour un bit de valeur logique "1" à délivrer un signal logique ayant un état haut pendant une première durée prédéterminée et un état bas pendant une deuxième durée prédéterminée, et, pour un bit de valeur logique "0" à délivrer un signal logique restant à l'état bas pendant la totalité des première et deuxième durées; le transducteur ne délivre alors aucun signal acoustique en réponse à un signal logique à l'état bas et délivrer un signal acoustique monofréquence en réponse à un signal logique à l'état haut, la fréquence du signal acoustique monofréquence étant sensiblement située au centre de la bande passante d'une ligne téléphonique.

L'invention a également pour objet une station et un objet autonome appartenant au dispositif évoqué ci-avant.

D'autres avantages et caractéristiques de l'invention apparaîtront à l'examen de la description détaillée d'un mode de mise en oeuvre et de réalisation nullement limitatif de l'invention, et illustré sur les dessins annexés sur lesquels :
- la figure 1 est un synoptique schématique d'un mode de réalisation d'un dispositif selon l'invention,
- la figure 2 illustre une variante de réalisation du dispositif selon l'invention,
- les figures 3a à 3c illustrent une mise en oeuvre du procédé selon l'invention,
- les figures 4, 5 et 6 illustrent d'autres applications de l'invention, et,
- les figures 7 et 8 illustrent une transmission de données entre un poste téléphonique d'appel et une station.

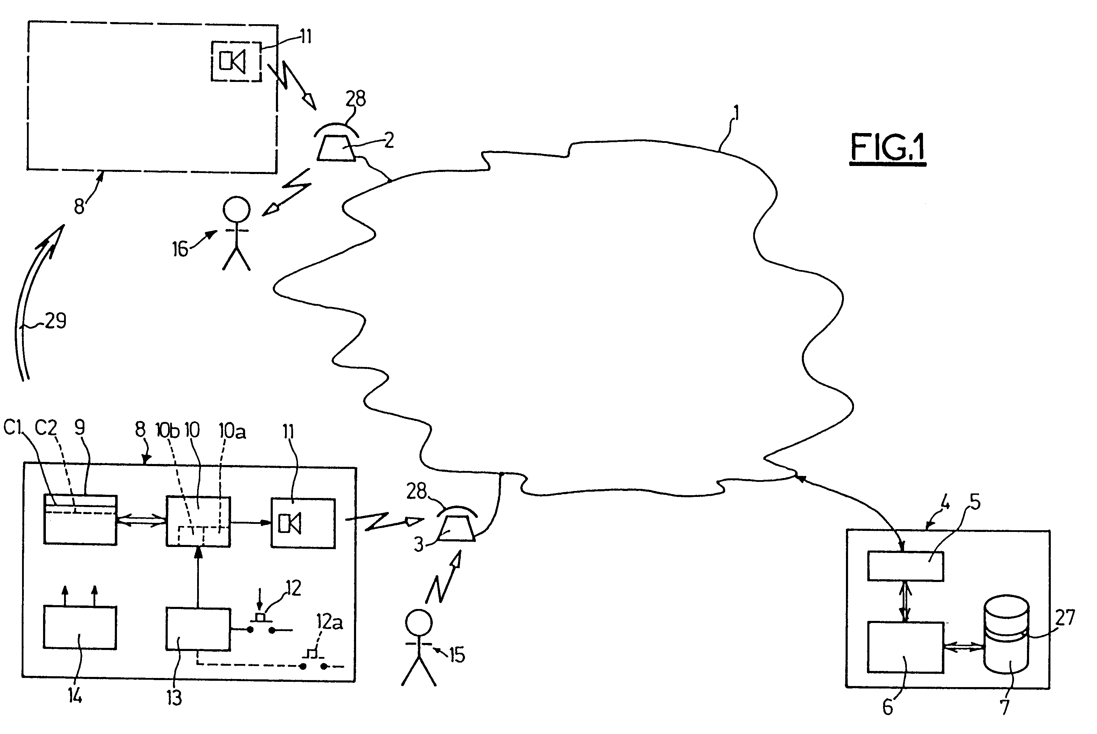

Sur la figure 1 la référence 1 désigne un réseau téléphonique tel que le réseau téléphonique commuté public. Sur ce réseau 1 sont connectés une pluralité de postes téléphoniques 2, 3 ainsi qu'une station 4, telle qu'un serveur vocal, équipée d'une interface-station 5 connectée au réseau téléphonique, de moyens de traitement-station 6 incorporant des moyens de synthèse vocale, ainsi que d'une mémoire-station 7.

Outre la station 4, le dispositif selon l'invention comprend également un objet autonome 8 qui est, dans l'exemple décrit, détenu par un expéditeur 15 souhaitant envoyer cet objet accompagné d'un message à un destinataire 16. Cet objet peut être par exemple une carte de voeux. Cet objet dispose alors d'un petit module électronique présenté sous diverses formes (coeur, bougie, gâteau, cadeau...) incorporant une mémoire-objet 9, du type mémoire vive, des moyens de traitement-objet 10, un transducteur 11 et des moyens d'activation des moyens de traitement-objet 10, comportant, par exemple disposés sur la surface externe de la carte, un contact manuel tel qu'une touche 12 associée à un circuit électronique approprié 13 capable de délivrer une impulsion de commande aux moyens de traitement-objet 10. L'ensemble du module électronique est alimenté par un moyen d'alimentation autonome 14, tel qu'une pile. Les moyens de traitement-objet peuvent être réalisés à partir d'un microprocesseur ou bien encore à l'aide d'un circuit câblé spécifique.

Le transducteur 11 est apte à convertir un signal d'entrée en un signal de sortie capable d'être reçu par l'interface de communication 28 d'un poste d'appel, ici un poste téléphonique. En l'espèce, le transducteur 11, par exemple une lame piézo-électrique, est du type électroacoustique, et est capable de délivrer un signal acoustique susceptible d'être perçu par le microphone du poste téléphonique 3 ou 2.

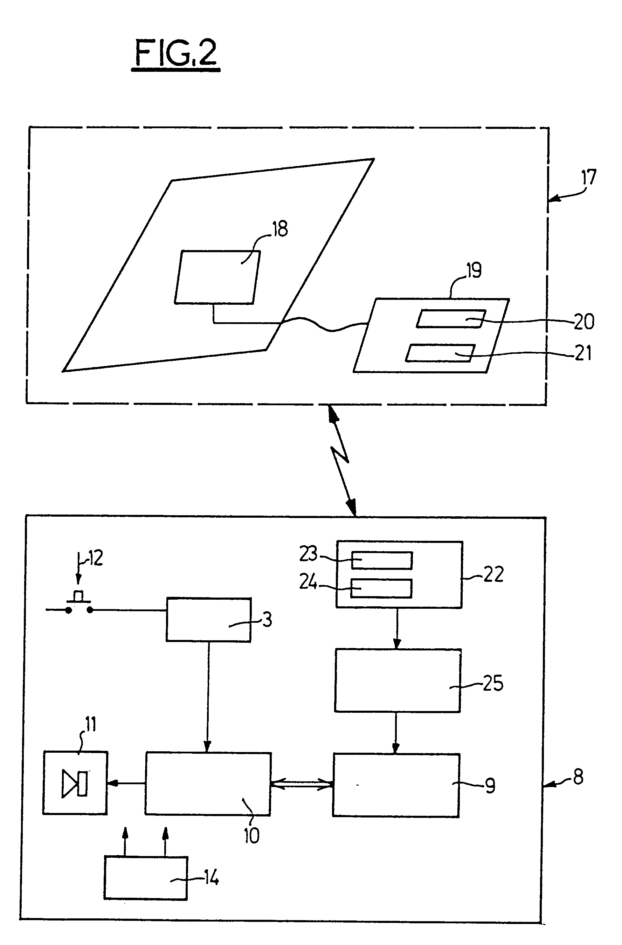

Dans le cas où par exemple, un expéditeur souhaite utiliser les service d'un organisme chargé d'expédier des articles, tels que des bouquets de fleurs, à un destinataire désigné par l'expéditeur, en adjoignant au bouquet de fleurs une carte que l'expéditeur souhaite accompagner d'un message d'informations destiné au destinataire, le dispositif selon l'invention peut comprendre des moyens de validation 17 externes à l'objet autonome 8, et incorporés par exemple au sein de terminaux informatiques situés auprès des revendeurs de l'organisme (figure 2). Ces moyens de validation externes comportent des moyens de délivrance 18 d'un code d'identification-objet, associé à l'objet autonome 8 et dont on reviendra plus en détail ici après sur la signification, ainsi que des moyens d'interface 19, reliés aux moyens 18, et comportant par exemple deux plages de cuivres 20 et 21 susceptibles de coopérer par couplage capacitif avec une interface de communication-objet 22 de l'objet autonome 8, équipée de plages métalliques homologues 23 et 24. Cette interface 22 est suivie d'un circuit classique d'activation de la mémoire 9 permettant, à la réception du code d'identification-objet, son stockage dans ladite mémoire.

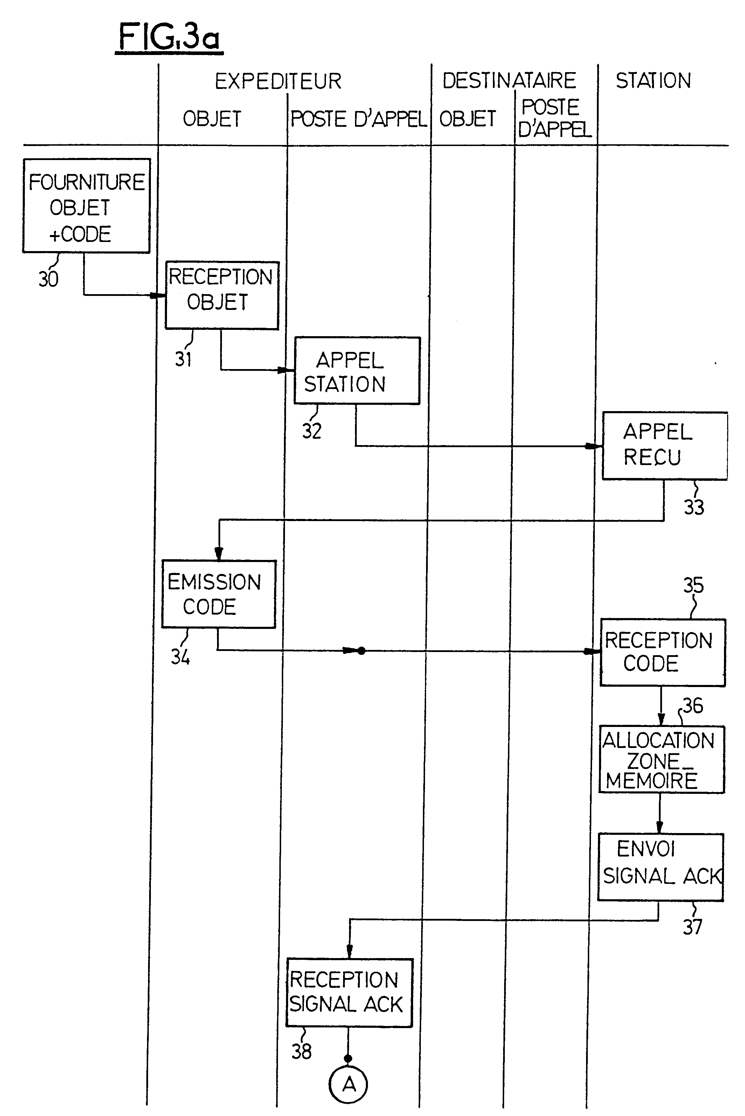

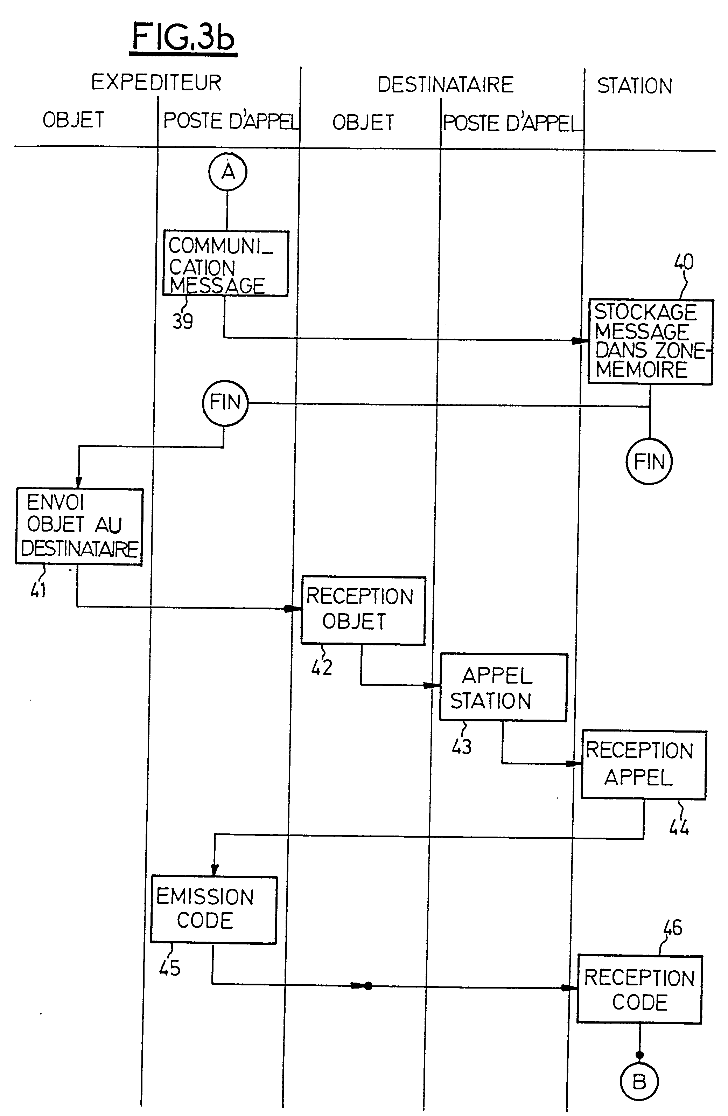

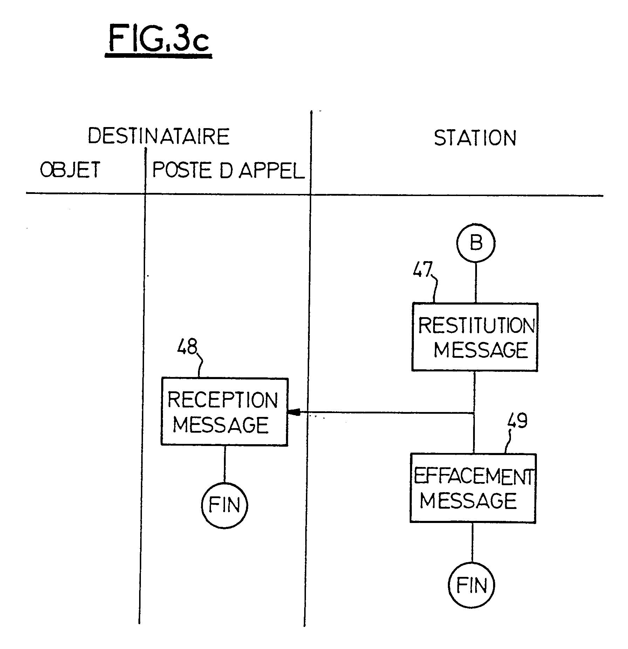

On va maintenant décrire en détail une mise en oeuvre du procédé selon l'invention, en se référant plus particulièrement aux figures 3a à 3c, dans le cas où un expéditeur souhaite faire parvenir par exemple une carte, de voeux par exemple, accompagnée d'un message vocal, à un destinataire.

L'expéditeur peut simplement se procurer (étape 30) auprès d'un point de vente, une carte 8 équipée de son module électronique dont la mémoire-objet 9 contient déjà un code d'identification-objet associé à cette carte. Ce code d'identification-objet, de quelques bits, a par exemple été stocké dans la mémoire-objet 9 lors de la fabrication de la carte de voeux en usine.

Après avoir reçu l'objet contenant son code d'identification-objet (étape 31), l'expéditeur appelle, dans l'étape 32, à l'aide d'un poste téléphonique d'appel, la station 4, en l'espèce le serveur téléphonique vocal. Lorsque l'appel de l'expéditeur a été reçu par le serveur dans l'étape 33, et que la liaison téléphonique a été établie, l'expéditeur actionne la touche 12 des moyens d'activation de la carte, ce qui a pour conséquence d'activer les moyens de traitement-objet 10 afin que ceux-ci puissent lire le code d'identification-objet stocké dans la mémoire 9 et délivrer au transducteur électroacoustique 11 un signal d'entrée d'identification correspondant, que le transducteur va convertir en un signal de sortie d'identification correspondant acoustique. Ceci permet donc (étape 34) l'émission du code d'identification-objet à l'extérieur de cet objet 8. Bien entendu, préalablement à l'activation, par action sur la touche 12, des moyens de traitement-objet 10, l'expéditeur avait placé le transducteur 11 en coopération acoustique avec le microphone de son poste téléphonique.

En conséquence, le code d'identification-objet émis à l'extérieur de l'objet 8 est transmis, par l'intermédiaire du poste téléphonique d'appel et du réseau téléphonique, au serveur qui le reçoit dans l'étape 35 et qui l'interprète comme un signal d'allocation. A réception de ce code, les moyens de traitement-station 6 allouent au sein de la mémoire-station 7 une zone mémoire 27 et envoie, dans l'étape 37, à destination de l'expéditeur, un signal référencé ici ACK que l'expéditeur reçoit dans l'étape 38. Après réception de ce signal ACK qui peut être par exemple une invitation orale à parler, l'expéditeur communique verbalement, dans l'étape 39, son message d'information destiné au destinataire par l'intermédiaire du microphone de son poste téléphonique. Ce message est stocké dans l'étape 40, par les moyens de traitement-station 6 dans la zone mémoire allouée 27, ce qui met fin à la première phase du procédé selon l'invention.

La carte 8 est alors envoyée au destinataire (étape 41) par les voies postales 29 par exemple.

A la réception de cette carte 8 (étape 42) le destinataire est invité, par une indication décrite figurant sur la carte 8, à appeler le numéro téléphonique d'appel du serveur 4, ce qu'il fait dans l'étape 43. Après réception de cet appel par le serveur et établissement de la liaison téléphonique (étape 44), le destinataire met le transducteur 11 de la carte 8 en coopération acoustique avec le microphone de son poste d'appel 2 et actionne la touche 12 des moyens d'activation ce qui a pour conséquence de faire émettre par le transducteur 11 un signal de sortie d'identification contenant le code d'identification-objet stocké dans la mémoire-objet 9. Ce code d'identification-objet s'apparente alors à un code d'identification-mémoire puisqu'il est associé à la zone mémoire 27 allouée dans le serveur. Le signal téléphonique, reçu par l'interface-station du serveur, et correspondant au signal d'identification de sortie émis par le transducteur 11 de la carte, agit ici comme un signal de restitution en présence duquel, les moyens de traitement-station 6 extraient de la zone mémoire allouée 27 les données de message correspondantes stockées et restituent par l'intermédiaire de l'interface-station 5 et du réseau téléphonique 1 le message d'information au destinataire que celui-ci peut écouter par l'intermédiaire du haut-parleur de son poste téléphonique (étape 47 et 48).

Les moyens de traitement-station peuvent alors avantageusement effacer le message stocké dans la mémoire station (étape 49) afin de libérer la zone mémoire 27.

Les signaux d'allocation et de restitution comportent au moins une partie commune constituée par le code d'identification-mémoire ou - objet. On pourrait cependant concevoir qu'ils comportent en outre un autre élément permettant de les différencier vis-à-vis du serveur. Une telle différenciation pourrait être effectuée directement par les moyens de traitement-station. Ainsi dans ce cas, la première réception du code d'identification pourrait être interprétée comme le signal d'allocation tandis que la ou les réceptions ultérieures seraient interprétées en tant que signal de restitution.

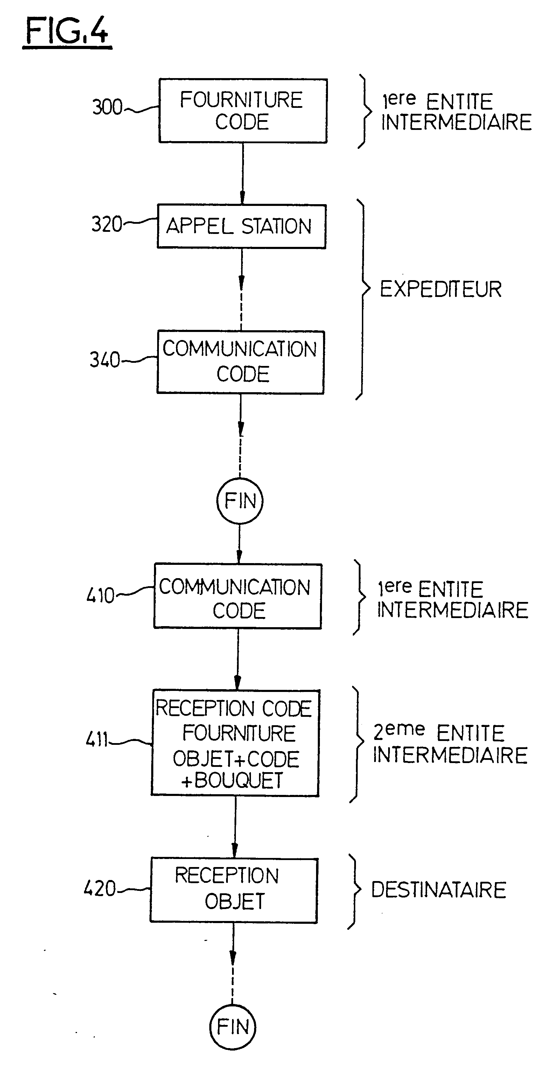

D'autres applications de l'invention peuvent être envisagées, telles que celles dans laquelle un expéditeur souhaite faire parvenir par exemple un bouquet de fleurs accompagné d'une carte et d'un message vocal, à un destinataire. Un tel mode de mise en oeuvre du procédé selon l'invention est illustré partiellement sur la figure 4, sur laquelle à des fins de simplification, on n'a représenté essentiellement que les différences avec les figures 3a à 3c.

Dans l'étape 300, une première entité intermédiaire, par exemple un revendeur d'un organisme spécialisé, communique, par exemple oralement, un code d'identification-objet à l'expéditeur. Celui-ci décroche alors un téléphone, appelle la station (étape 320) et communique oralement au serveur le code d'identification-objet (étape 340). Le stockage du message dans la station s'effectue alors comme expliqué plus haut (étapes 35 à 40). Ceci ayant été effectué, et le bouquet de fleurs commandé auprès de ce premier revendeur, ce dernier, communique alors, par exemple par téléphone, à un deuxième revendeur (agissant comme une deuxième entité intermédiaire) situé dans la région du destinataire, les caractéristiques de la commande ainsi que le code d'identification-objet (étape 410). Le deuxième revendeur, en possession d'objets autonomes réalisés exempts de code en mémoire, fournit alors au destinataire le bouquet ainsi qu'un objet autonome contenant ledit code d'identification-objet qui va devenir le code d'identification-mémoire. Pour effectuer le stockage du code dans la mémoire 9, le revendeur introduit celui-ci au clavier de son terminal 17 pour mémorisation dans une mémoire associée au microprocesseur du terminal, puis fait coopérer les plaques de cuivre homologues 20, 21, 23 et 24 des moyens de validation 17 et de la carte 8. Le processeur délivre alors ledit code d'identification. Le procédé selon l'invention se poursuit alors par l'étape 420 analogue à l'étape 42, et par les étapes 43 à 49.

Plus généralement, il peut s'avérer, que dans certaines applications, la phase d'enregistrement téléphonique du message d'informations par l'expéditeur ne soit pas indispensable. En effet, dans le cas où par exemple une société souhaite envoyer à de nombreux clients des cartes d'invitation selon l'invention afin de les convier à une manifestation commerciale pour le lancement d'un nouveau produit, tel qu'une nouvelle gamme de voitures, l'expéditeur (ladite société) peut alors faire stocker directement par des moyens appropriés un message d'invitation dans une zone mémoire prédéterminée de la mémoire-station de son propre serveur. Les codes d'identifications stockés dans les mémoires-objets respectives des objets autonomes envoyés aux clients seront alors affectés à cette zone-mémoire prédéterminée et devront donc être considérés dans le cas présent comme des codes d'identification-mémoire. Bien entendu dans ce cas, le signal d'allocation de la zone-mémoire est un signal d'adressage interne de la mémoire-station émis par lesdits moyens appropriés.

Chaque client recevant son objet autonome, par exemple une voiture miniature équipée d'une touche d'actionnement 12, sera invité à composer le numéro d'appel téléphonique du serveur et, par pression sur la touche 12, percevra une invitation orale à se rendre à ladite manifestation commerciale. Dans cet exemple, on a supposé que tous les codes d'identification-mémoire de tous les objets autonomes envoyés à tous les clients étaient identiques et correspondait donc au même message stocké dans l'unique zone-mémoire.prédéterminée. Néanmoins, il est parfaitement concevable, afin de personnaliser les messages vocaux d'invitation, d'affecter à chaque objet autonome un code d'identification-mémoire différent et correspondant à une zone-mémoire différente de la mémoire-station du serveur.

Dans de telles applications, le procédé selon l'invention débute alors simplement à l'étape 41.

C'est également le cas lors d'une application de service après vente. Ainsi, un produit vendu peut être accompagné d'un objet autonome contenant un code d'identification-mémoire associé à un message prédéterminé enregistré par le vendeur dans un serveur et correspondant spécifiquement au type d'appareil vendu. Ce message pourra par exemple être écouté par l'acheteur en cas de mauvais fonctionnement de son produit.

L'invention s'applique également avantageusement à la radio-messagerie (radio-paging). De tels récepteurs fonctionnent par intermittence au cours d'intervalles temporels successifs qui leur sont alloués, et sont dans un état de repos en dehors de ces intervalles pour notamment économiser leur source d'énergie. Ils peuvent recevoir, dans leur phase de fonctionnement, de simples appels se traduisant par l'émission d'un signal sonore indiquant au possesseur du récepteur que l'on cherche à le contacter. Celui-ci doit alors rappeler un numéro de téléphone prédéterminé. Mais, les récepteurs peuvent également recevoir dans leur phase de fonctionnnement des messages alphanumériques qui s'affichent sur leur écran. Cependant, en raison de la taille réduite de ces écrans, la nature, et surtout la longueur, des messages transmis est fortement limitée. L'invention permet d'augmenter considérablement la taille des messages où l'on souhaite faire parvenir au possesseur du récepteur de radio-messagerie concerné.

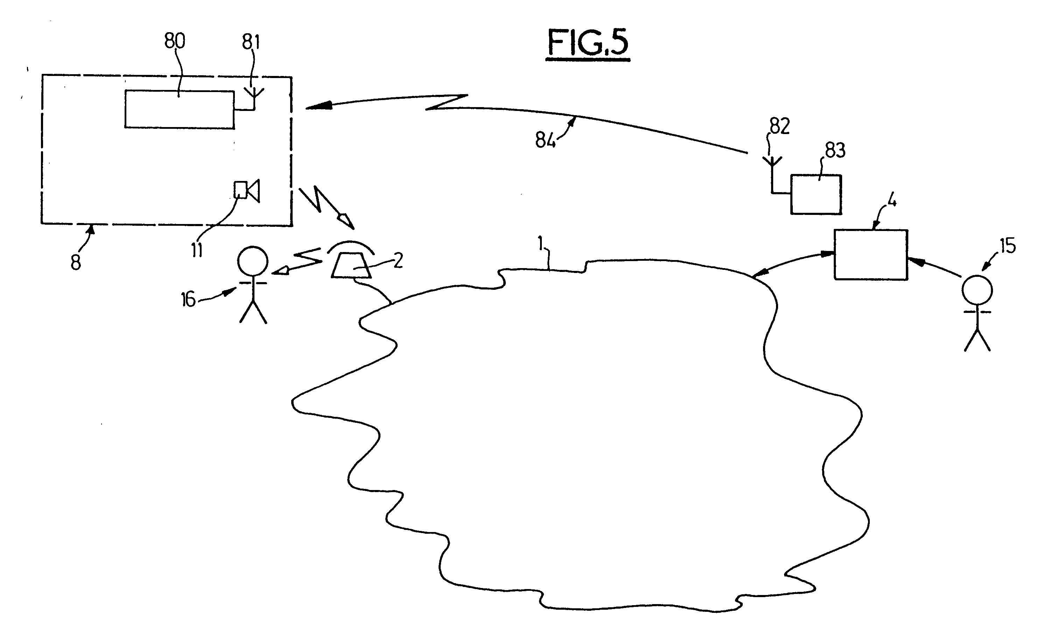

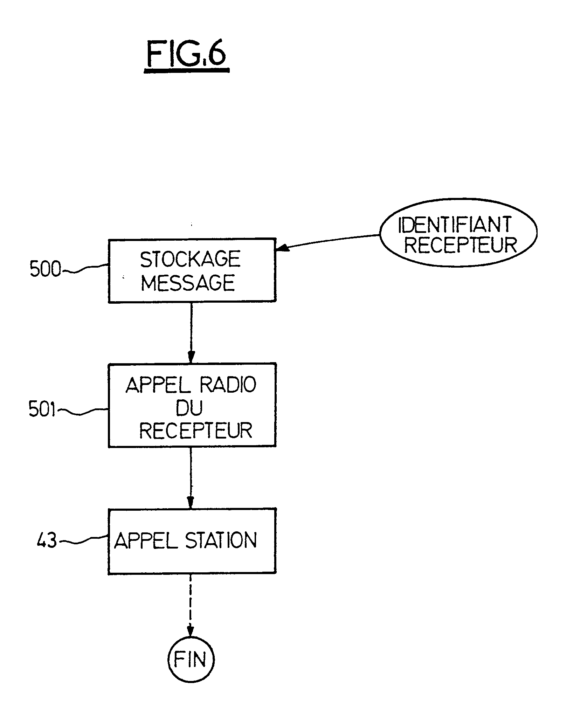

Généralement, la gestion de ces récepteurs de radio-messagerie est effectuée par un organisme spécialisé équipé de moyens d'émission radio-fréquence 82, 83 aux fins de transmission de données d'information par l'intermédiaire d'un milieu de transmission de données spécifique 84, tel qu'un milieu radio-fréquence. Aussi, l'expéditeur fait-il stocker par cet organisme spécialisé le message d'information qu'il souhaite faire parvenir au possesseur du récepteur, dans le serveur vocal approprié 4 (figure 5). Ce message est stocké dans une zone-mémoire du serveur, associée à l'identifiant radiofréquence du récepteur, qui sert alors ici avantageusement de code d'identification-mémoire (étape 500 figure 6). L'expéditeur fait alors appeler le récepteur par l'organisme spécialisé (étape 501). A la réception de cet appel radio spécifique par les moyens de réception 80 et 81, une indication spécifique peut alors s'afficher sur l'écran du récepteur, invitant son possesseur, à appeler la station en effectuant les étapes 43 à 48. Bien entendu, à cette fin, le récepteur de radio-messagerie a été équipé des moyens qui ont déjà été décrits en référence à la figure 1. La touche d'actionnement permettant l'émission du code d'identification-mémoire en direction de la station, peut être par exemple l'une des touches du clavier du récepteur.

Bien que divers réseaux de transmission de données puissent être envisagés, comme par exemple des réseaux de transmission à fibres optiques, moyennant des postes d'appel appropriés, et bien que les enregistrements de message puissent être effectués ou restitués autrement que par voie orale, il a été jugé actuellement préférable, notamment pour utiliser des infrastructures déjà existantes et pour des raisons de coût, d'utiliser un réseau téléphonique et un serveur vocal. Compte tenu de ce choix particulier, il serait possible d'utiliser par exemple le mode classique de transmission téléphonique connu par l'homme du métier sous le sigle FSK (frequency shift keying) qui utilise deux fréquences de transmission pour transmettre un bit informatique selon sa valeur logique 0 ou 1. Néanmoins, il a été observé qu'il était préférable d'utiliser, à la place notamment d'un mode de transmission du type FSK, un codage utilisant un signal monofréquence. On évite ainsi de perturber la transmission des données avec des fréquences parasites et on peut aboutir de surcroît à une simplification matérielle de l'émetteur.

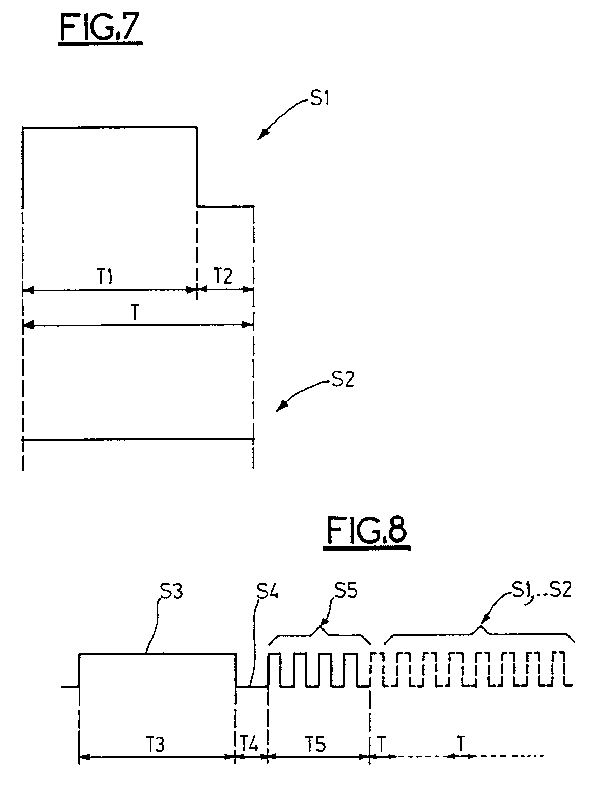

Concrètement, les moyens de traitement-objet de l'objet autonome 8 comportent alors des moyens de codage 10a aptes, pour un bit de valeur logique 1, à délivrer un signal logique ayant un état haut pendant une première durée prédéterminée et un état bas pendant une deuxième durée prédéterminée, et, pour un bit de valeur logique zéro à délivrer un signal logique ayant l'état bas pendant la totalité des première et deuxième durées. En combinaison, le transducteur ne délivrera aucun signal acoustique en réponse à un signal logique à l'état bas et, en réponse à un signal logique à l'état haut, il délivrera un signal acoustique monofréquence dont la fréquence se situe sensiblement au centre de la bande passante d'une ligne téléphonique. On utilisera ainsi de préférence une fréquence de 2048 hertz qui est par ailleurs facilement réalisable à partir d'un microcontrôleur 4 bits classique puisque cette fréquence est un multiple de 2. Les signaux logiques S1 et S2 correspondant à des codages de bits ayant respectivement des valeurs logiques "1" et "0" sont illustrés sur la figure 7. La durée T totale de transmission d'un bit est de 15,625 ms, ce qui correspond à environ trois fois la constante de temps d'un microphone à charbon équipant un poste téléphonique. En ce qui concerne le signal S1, la durée T1 pendant laquelle le signal logique est à l'état haut est prise égale à 11,71875 ms tandis que la durée T2 est égale à 3,90625 ms.

En fait, seul le gabarit du signal S1 est représenté à des fins de simplification sur la figure 7, et l'on parlera néanmoins d'état haut pour le signal S1 pendant la durée T1 bien qu'en réalité, pendant cette durée, le signal se compose d'une pluralité de pics à la fréquence de 2048 hertz.

Cette durée de transmission de 15,625 ms, correspondant à une vitesse de transmission de 64 bauds, a été adoptée ici en raison de sa facilité de réalisation. On pourra néanmoins choisir une vitesse de transmission optimale comprise entre 15 bauds et 16 bauds ce qui permet d'obtenir un signal de transmission stable compte tenu de la constante de temps de microphones à charbon.

Les moyens de codage peuvent être réalisés de façon logicielle au sein du microprocesseur de l'objet autonome 8, ou bien par un circuit câblé spécifique. De même, les moyens de décodage peuvent être réalisés dans le serveur de façon logicielle au sein des moyens de traitement-station.

La transmission des données s'effectue par l'émission de trames successives. La réception, au niveau du serveur local, est alors de type synchrone c'est-à-dire qu'il y a une synchronisation réalisée sur l'entête de chaque trame émise. Cette synchronisation permet notamment le réglage des niveaux de réception par un dispositif de contrôle automatique de gain, la détection de la vitesse de transmission, et le calage des moyens de réception. Le réglage du niveau de réception par un dispositif de contrôle automatique de gain permet une bonne réception des trames et compense la perte de niveau due au microphone à charbon, ou aux moyens d'amplification d'un signal réalisés par un microphone électronique.

Une trame de transmission est illustrée sur la figure 5. La durée de l'en-tête d'une trame est de 575 ms et se décompose en un signal logique S3 à l'état haut pendant une durée T3 de 400 ms maximum permettant le contrôle automatique du gain, suivi d'un signal à l'état bas S4 pendant une durée T4 de 50 ms permettant le calage du récepteur, suivi enfin d'un octet de synchronisation S5 comportant une alternance de bits "1" et de bits "0" pendant 125 ms. Les signaux S1 et/ou S2 correspondant par exemple à l'émission du code d'identification-objet ou mémoire de chaque objet autonome, et ultérieurement à la transmission des données de message, sont transmis ensuite.

Il s'avère préférable dans certaines applications, notamment de type bancaire, de sécuriser la transmission du code d'identification-mémoire depuis l'objet autonome vers la station, en l'espèce le serveur vocal d'un établissement financier. Aussi l'objet autonome, qui a été fourni par l'établissement financier, avec son code d'identification-mémoire, contient-il des moyens de sécurisation 10b, situés par exemple en amont des moyens 10a lorsque ces derniers sont prévus. Ces moyens de sécurisation peuvent utiliser un algorithme de cryptage à clé secrète ou plus simplement le principe d'une clé dynamique variant dans le temps pour transmettre un certificat chiffré dépendant du code d'identification-mémoire et d'une donnée temporelle. On peut ainsi prévoir un circuit logique spécifique, réalisé par exemple à base de portes logiques XOR, recevant en entrée le code d'identification et une donnée temporelle issu d'une source de temps absolue, et délivrant le certificat en sortie. Le serveur est alors équipé de moyens de sécurisation analogues et peut notamment recalculer le code d'identification-mémoire à partir du certificat reçu et de sa propre donnée temporelle obtenue à partir d'une source de temps absolu identique, et vérifier ainsi que le code d'identification émis ne provient pas d'un fraudeur. Bien entendu, pour tenir compte du temps de transmission entre l'objet et la station et de la dérive mutuelle des deux horloges, on adoptera une marge d'incertitude prédéterminée pour la valeur du temps prise en compte pour le calcul du certificat et la vérification du code.

Dans certains des différents modes de réalisation décrits précédemment, l'entité expéditrice et l'entité destinatrice d'un objet autonome ont été implicitement décrites comme étant respectivement deux personnes. Néanmoins, on pourrait concevoir dans certaines applications que l'entité expéditrice et/ou l'entité destinatrice soient composées respectivement de plusieurs personnes. Plusieurs membres d'une même famille pourraient ainsi, avec un seul objet autonome, tel qu'une carte de voeux, envoyer des messages à plusieurs membres différents d'une autre famille. Les moyens d'activation de la carte 8 comprendraient alors une pluralité de touches d'activation 12 et 12a (figure 1) permettant respectivement d'activer les moyens de traitement-objet 10 de cette carte afin de faire émettre une pluralité de codes d'identification-objet ou mémoire C1 et C2 stockés dans différentes zones de la mémoire-objet 9. Aussi, après appel du serveur, chacune des touches 12 et 12a serait actionnée successivement pour l'émission successive des codes d'identification-objet correspondants, et des zones de mémoire différentes seraient successivement allouées dans le serveur afin d'enregistrer la pluralité de messages souhaités. A la réception de cet objet par l'entité destinatrice, les différentes personnes la constituant seraient invitées, après avoir appelé le serveur, à actionner successivement les touches 12 et 12a qui leur ont été nommément désignées à l'aide d'une indication écrite sur la carte, pour faire émettre à nouveau les codes d'identification-message et écouter les messages qui leur sont individuellement destinés.

L'invention permet donc en équipant un objet autonome d'une mémoire de très faible capacité (quelques octets) et en "déportant" en dehors de cet objet la mémoire de stockage des messages, d'utiliser une capacité mémoire importante autorisant l'enregistrement de messages éventuellement longs, tout en ne pénalisant pas l'encombrement de l'objet autonome. Par ailleurs, on obtient par l'invention une association sûre expéditeur-message-destinataire tout en utilisant une même mémoire pour différents messages et couples expéditeur-destinataire.

En ce qui concerne l'application de l'invention à la transmission d'un message d'information et d'un objet autonome entre une entité expéditrice et une entité destinatrice, l'invention offre donc d'une manière générale un procédé d'association d'un message d'information et d'un objet autonome, destinés à être transmis entre une entité expéditrice de l'objet et du message, et une entité destinatrice de l'objet et du message, procédé dans lequel:
- on équipe l'objet autonome d'une mémoire-objet destinée à contenir un code d'identification-objet avant la transmission de l'objet à l'entité destinatrice, et ce code étant susceptible d'être émis à l'extérieur de l'objet sur activation au moins par l'entité destinatrice,
- on relie une station contenant une mémoire-station, à au moins à un poste d'appel, par l'intermédiaire d'un milieu de transmission de données, ledit poste d'appel possédant une interface de communication avec l'entité destinatrice, et
- on prévoit dans la mémoire-station, au moins une zone-mémoire capable d'être allouée à l'objet autonome en correspondance de son code d'identification-objet,
   ladite zone-mémoire étant adressable une première fois, en réponse à un signal d'allocation contenant le code d'identification-objet, avant la transmission de l'objet autonome, de façon à stocker dans cette zone-mémoire ledit message d'information, et une deuxième fois, à la réception d'un signal de restitution contenant le code d'identification-objet, et obtenu à partir de ladite activation à partir de l'objet autonome reçu par l'entité destinatrice, et de la transmission depuis l'objet autonome vers la station par l'intermédiaire de l'interface de communication du poste d'appel et du milieu de transmission de données,
   la station restituant alors le message stocké dans la zone-mémoire, sur le milieu de transmission de données, vers l'interface de communication du poste d'appel.

## Revendications

1. Procédé de transmission d'informations entre une entité expéditrice et une entité destinatrice, caractérisé par le fait que :
a) l'entité expéditrice (15) stocke ou fait stocker au moins un message d'information destiné à l'entité destinatrice (16) dans une zone-mémoire (27) d'une mémoire-station (7) d'une station (4) susceptible d'être appelée par l'entité destinatrice (16) en utilisant au moins un poste d'appel (2) relié à ladite station (4) par un milieu de transmission de données (1), et possédant une interface de communication (28) avec l'entité destinatrice,
b) l'entité destinatrice (16) étant en possession d'un objet autonome (8) fourni directement ou indirectement par l'entité expéditrice ou susceptible d'être appelé à distance directement ou indirectement par l'entité expéditrice, et contenant un code d'identification-mémoire (C1) associé à la zone-mémoire (27) et susceptible d'être émis (34) à l'extérieur de l'objet sur activation par l'entité destinatrice, l'entité destinatrice (16) se connecte (43) à la station (4) en utilisant le poste d'appel (2) et active l'objet autonome (8) pour faire émettre (45) ledit code d'identification-mémoire en direction de l'interface de communication (28) du poste d'appel (2), ledit code d'identification-mémoire étant alors transmis sur le milieu de transmission de données (1) en direction de la station (4), et
c) la station (4), à la réception du code d'identification-mémoire, restitue (47) le message stocké dans la zone-mémoire (27), sur le milieu de transmission de données (1) vers le poste d'appel (2), l'entité destinatrice (16) percevant ledit message d'information par l'intermédiaire de l'interface de communication (28) de son poste d'appel.

2. Procédé selon la revendication 1, caractérisé par le fait que l'entité expéditrice fournit ou fait fournir l'objet autonome à l'entité destinatrice avec une indication du numéro d'appel de la station et par le fait que l'entité destinatrice se connecte à la station après la réception de l'objet autonome.

3. Procédé selon la revendication 2, caractérisé par le fait que dans l'étape a):
a1) on fournit à l'entité expéditrice (15) un code d'identification-objet,
a2) l'entité expéditrice se connecte (32) à la station (4) par l'intermédiaire d'un poste d'appel (3) relié à la station puis communique ledit code d'identification-objet sur le milieu de transmission de données en direction de la station, et
a3) la station (4) alloue (36) la zone-mémoire (27) à la réception dudit code d'identification-objet, puis l'entité expéditrice communique son message à la station par l'intermédiaire de l'interface de communication (28) du poste d'appel (3), et la station stocke le message reçu dans la zone-mémoire allouée,
et par le fait que dans l'étape b) le code d'identification-mémoire est le code d'identification-objet.

4. Procédé selon la revendication 3, caractérisé par le fait que dans l'étape a1) on fournit à l'entité expéditrice l'objet autonome contenant le code d'identification-objet, et par le fait que dans l'étape a2) l'entité expéditrice communique le code d'identification-objet à la station en activant ledit objet autonome pour faire émettre ledit code d'identification-objet en direction de l'interface de communication (28) du poste d'appel (3).

5. Procédé selon la revendication 3, caractérisé par le fait que dans l'étape a1) le code d'identification-objet est fourni à l'entité expéditrice par une première entité intermédiaire,
par le fait que l'on réalise les objets autonomes exempts de codes d'identification-objet, par le fait que l'on fournit ces objets à une deuxième entité intermédiaire (17),
par le fait que la première entité intermédiaire communique le code d'identification-objet à la deuxième entité intermédiaire qui fournit l'objet autonome à l'entité destinatrice en allouant à l'objet antonome ledit code d'identification-objet.

6. Procédé selon l'une des revendications 3 à 5, dans lequel le milieu de transmission de données par fait partie d'un réseau de transmission de données équipé d'une pluralité de postes d'appel, caractérisé en ce que l'entité expéditrice et l'entité destinatrice peuvent appeler la station à partir du même poste d'appel ou de postes d'appel différents.

7. Procédé selon l'une des revendications 3 à 6, dans lequel le réseau de transmission est un réseau téléphonique, tel que le réseau téléphonique commuté public, équipé de postes d'appel téléphoniques, et dans lequel la station est un serveur vocal téléphonique, caractérisé par le fait que le code d'identification est émis de façon acoustique en direction du microphone du poste téléphonique tandis que l'entité expéditrice communique oralement son message pendant un temps prédéterminé au serveur par l'intermédiaire du microphone et que l'entité destinatrice perçoit oralement le message par l'intermédiaire du haut-parleur du poste d'appel.

8. Procédé selon l'une des revendications précédentes, dans lequel l'entité expéditrice transmet une pluralité de messages à l'entité réceptrice et dans lequel l'objet autonome contient une pluralité de codes d'identification associés respectivement à la pluralité de messages et à une pluralité de zones-mémoires correspondantes, caractérisé par le fait que dans l'étape c) on fait émettre successivement la pluralité de codes d'identification-mémoire vers la station, la station restituant alors successivement dans l'étape d) la pluralité de messages enregistrés.

9. Procédé selon la revendication 1, caractérisé par le fait que l'on équipe l'objet autonome de moyens de réception-objet susceptibles de coopérer avec un autre milieu de transmission de données,
par le fait que l'entité destinatrice est en possession de l'objet autonome avant le stockage du message d'information dans la zone-mémoire,
par le fait que l'entité expéditrice transmet ou fait transmettre un appel spécifique de l'objet autonome par l'intermédiaire dudit autre milieu de transmission de données et par le fait que l'entité destinatrice se connecte à ladite station après réception dudit appel spécifique.

10. Procédé selon l'une des revendications précédentes, caractérisé par le fait que le code d'identification-mémoire est transmis sécurisé.

11. Dispositif de transmission d'informations entre une entité expéditrice et une entité destinatrice, caractérisé par le fait qu'il comprend :
- une station (4) comportant
. une interface-station (5) connectée à un milieu de transmission de données (1) reliant cette station à au moins un poste d'appel(2, 3) susceptible d'établir une liaison avec ladite station et équipé d'une interface de communication (28) avec l'entité destinatrice (16),
. une mémoire-station (7) apte à stocker dans une zone-mémoire prédéterminée (27), des données de message représentatives d'au moins un message d'information choisi par l'entité expéditrice (15), et
. des moyens de traitement-station (6), aptes en réponse à un signal de restitution prédéterminée reçu par l'interface-station (5), à lire les données de message dans la zone-mémoire (27) aux fins de restitution à l'interface de communication (28) du poste d'appel, par l'intermédiaire du milieu de transmission de données, dudit message d'information, et,
- un objet autonome (8) destiné à être en possession de l'entité destinatrice, comportant :
un transducteur (11) apte en présence d'un signal d'entrée à délivrer un signal de sortie capable d'être reçu par l'interface de communication (28) du poste d'appel (2, 3), une mémoire-objet (9) susceptible de contenir un code d'identification-mémoire (C1) associé à la zone-mémoire prédéterminée (27),
. des moyens de traitement-objet (10), reliés à la mémoire-objet (9), et aptes, sur activation, à lire le code d'identification-mémoire dans la mémoire-objet et à délivrer au transducteur un signal d'entrée d'identification correspondant, ce dernier délivrant alors à l'interface de communication (28) du poste d'appel, un signal de sortie d'identification correspondant, à partir duquel est obtenu ledit signal de restitution, et
. des moyens d'activation (12, 13) aptes, en réponse à un actionnement externe, à activer les moyens de traitement-objet (10).

12. Dispositif selon la revendication 11, caractérisé par le fait que les moyens de traitement-station (6) sont aptes, en réponse à un signal d'allocation prédéterminé reçu par l'interface-station (5), à réserver ladite zone-mémoire (27) dans la mémoire-station (7) et à y stocker lesdites données de message transmises par l'entité expéditrice (15)

13. Dispositif selon la revendication 12, caractérisé par le fait que la mémoire-objet (9) est susceptible de contenir un code d'identification-objet transmissible à l'interface de communication du poste d'appel (3) par l'intermédiaire d'un signal de sortie d'identification-objet correspondant émis du transducteur (11), sur activation des moyens de traitement-objet,
par le fait que le signal d'allocation est tiré dudit signal de sortie d'identification-objet correspondant
et par le fait que le code d'identification-mémoire est identique au code d'identification-objet.

14. Dispositif selon l'une des revendications 11 à 13 caractérisé par le fait que l'objet autonome comporte une interface de communication-objet (22) reliée à la mémoire-objet (9), susceptible de recevoir le code d'identification-objet,
et par le fait qu'il est prévu en outre des moyens de validation (17) externes à l'objet autonome (8) possédant des moyens d'interface (19) capables de coopérer avec l'interface de communication-objet (22) de l'objet autonome, et des moyens de délivrance (18) du code d'identification-objet à l'objet (8).

15. Dispositif selon l'une des revendications 11 à 14, caractérisé par le fait que les moyens d'activation comportent au moins un contact manuel actionnable (12) disposé sur la surface externe de l'objet.

16. Dispositif selon la revendication 15, caractérisé par le fait que la mémoire-objet est capable de stocker une pluralité de codes d'identification-mémoire (C1, C2), associés à une pluralité de messages, et par le fait que les moyens d'activation comportent une pluralité de touches (12, 12a) actionnables et associées à la pluralité de codes d'identification-mémoire.

17. Dispositif selon l'une des revendications 11 à 16, caractérisé par le fait que le milieu de transmission de données fait partie d'un réseau téléphonique équipé de postes téléphoniques formant les postes d'appel potentiels et d'un serveur vocal téléphonique formant ladite station, et par le fait que le transducteur est un transducteur électroacoustique capable de coopérer avec le microphone d'un poste téléphonique.

18. Dispositif selon la revendication 17, caractérisé par le fait que le code d'identification-mémoire est composé d'une pluralité de bits,
par le fait que les moyens de traitement-objet comportent des moyens de codage aptes, pour un bit de valeur logique "un" à délivrer un signal logique (S1) ayant un état haut pendant une première durée prédéterminée (T1) et un état bas pendant une deuxième durée prédéterminée (T2), et pour un bit de valeur logique "zéro", à délivrer un signal logique (S2) ayant l'état bas pendant la totalité des première et deuxième durées (T1, T2),
et par le fait que le transducteur (11) ne délivre aucun signal acoustique en réponse à un signal logique à l'état bas, et, délivre en réponse à un signal logique à l'état haut, un signal acoustique monofréquence dont la fréquence est située sensiblement au centre de la bande passante d'une ligne téléphonique.

19. Dispositif selon l'une des revendication 11 à 18, caractérisé par le fait que l'objet autonome forme en outre un récepteur de radio-messagerie possédant un identifiant formant ledit code d'identification-mémoire et par le fait que le dispositif comporte en outre des moyens d'appel radiofréquence du récepteur de radiomessagerie.

20. Dispositif selon l'une des revendications 11 à 19, caractérisé par le fait que l'objet autonome comporte des moyens de sécurisation du code d'identification-mémoire ou objet.

21. Station appartenant au dispositif selon l'une des revendications 11 à 20.

22. Objet autonome appartenant au dispositif selon l'une des revendications 11 à 20.
